# EUROPEAN PATENT APPLICATION

(11) **EP 4 273 532 A1**
(43) Date of publication of application: **08.11.2023**
(21) Application number: 22171895.0
(22) Date of filing: 05.05.2022
(51) Int. Cl.: G01N 1/40, G01N 23/207, G01N 23/20033

(54) **SAMPLE PREPARATION METHOD FOR STRUCTURE ELUCIDATION WITH POROUS FRAMEWORKS**

(71) Applicant: Merck Patent GmbH, 64293 Darmstadt (DE)
(72) Inventor: KUEHN, Clemens, 64293 Darmstadt (DE)
(74) Representative: Merck Serono S.A. Intellectual Property

(57) **Abstract**

The invention provides a sample preparation method for providing a prepared sample (25), the sample preparation method comprising: a preparation stage comprising providing a sample holding part (3), wherein the sample holding part (3) comprises a collection chamber (100) having an interior space (101), wherein the interior space (101) hosts one or more single crystals of a porous framework (20); a loading stage comprising providing a solvent (10) comprising an analyte (5) to the one or more single crystals of the porous framework (20); and an evaporation stage comprising periodically exchanging an aliquot of evaporation gas (40) from the interior space (101); thereby providing the prepared sample (25).

## Description

### FIELD OF THE INVENTION

The invention relates to a sample preparation method. The invention further relates to an analysis method. The invention further relates to a system.

### BACKGROUND OF THE INVENTION

Methods for preparing a sample for molecular structure elucidation using porous frameworks are known in the art. For instance, WO2016143872A1 describes a single crystal of a porous compound, the single crystal being used to produce a crystal structure analysis sample for a compound to be analyzed by contacting the single crystal of the porous compound having a three-dimensional framework and three-dimensionally regularly-arranged pores and/or hollows formed by being divided by the three-dimensional framework with a solution that includes the compound to be analyzed, and arranging molecules of the compound to be analyzed in a regular array in the pores and/or hollows. The single crystal of the porous compound are characterized in that: one side of the single crystal is 10 to 2000 µm; and the single crystal maintains monocrystalline properties even after the single crystal is placed in contact with a solvent that is chemically the same as the solvent of the solution that includes the compound to be analyzed.

### SUMMARY OF THE INVENTION

Molecule structure elucidation may make use of a crystalline porous network or a crystalline sponge. A crystal suited for single crystal X-ray crystallography may be infused with the molecule to be analyzed and can then be structurally characterized by, for instance, conventional X-ray crystallography, thereby elucidating the structure of the analyte.

Generally, the process of inclusion of the analyte into the network (soaking) may involve placing a conventional single crystal 20-350 µm in size into a special glass vial with a conical bottom or inset and slowly evaporating the solvent to provide inclusion of the analyte molecules into the framework lattice of the crystalline sponge. Such prior art processes may rely on passive evaporation of solvent through either defined holes using a canula of certain diameter or undefined leakage of the vial and thus loss of solvent over time.

However, such prior art approaches may suffer from a number of drawbacks. For instance, the evaporation of the solvent may be impacted by the direct environment of the vial: ambient air pressure, vapor pressure of solvent from vials evaporating nearby, air currents, and undefined flows may all affect evaporation.

Further, evaporation into ambient air may lead to the formation of explosive mixtures and/or health risks if harmful solvents are used.

In addition, the ambient air may enter the vial and may, due to properties of the ambient air such as humidity and gaseous composition (incl. O₂ presence), lead to contamination and/or decomposition of the crystals.

The prior art processes may further be limited in affecting the evaporation rate indirectly via selection of solvent, temperature and opening diameter, which may limit the experimental soaking conditions that can be imposed. For instance, a prior art method may be limited to soaking at a temperature of at most about 50°C. Further, leakage and/or blockage of part of the opening/a canula, e.g. by septum material, can lead to significant variations in soaking duration and even destruction of the crystals by loss of solvent if they run dry, or to unfinished soaking if at the expected end of the experiment a substantial amount of solvent was left. Such (unexpected) variations in soaking duration may be the top mode of failure for soaking experiments. Further, if the solvent contains minute amounts of water or adverse impurities, these may destroy the sponge at higher concentrations, i.e., if too much solvent has been evaporated.

Hence, it is an aspect of the invention to provide an alternative sample preparation method, which preferably further at least partly obviates one or more of above-described drawbacks. The present invention may have as object to overcome or ameliorate at least one of the disadvantages of the prior art, or to provide a useful alternative.

In a first aspect, the invention may provide a sample preparation method for providing a prepared sample. The sample preparation method may especially comprise a preparation stage, a loading stage, and an evaporation stage. The preparation stage may comprise providing a sample holding part, wherein the sample holding part comprises a collection chamber having an interior space, especially an air-tight interior space. The interior space may especially host one or more single crystals of a porous framework. The loading stage may comprise providing a solvent comprising an analyte to the one or more single crystals of the porous framework (in the interior space). The evaporation stage may comprise periodically, i.e., not continuously, exchanging an aliquot of evaporation gas from the interior space. Thereby, the sample preparation method may provide the prepared sample.

Hence, in specific embodiments, the method may provide a sample preparation method for providing a prepared sample, the sample preparation method comprising: a preparation stage comprising providing a sample holding part, wherein the sample holding part comprises a collection chamber having an interior space, wherein the interior space hosts one or more single crystals of a porous framework; a loading stage comprising providing a solvent comprising an analyte to the one or more single crystals of the porous framework; and an evaporation stage comprising periodically exchanging an aliquot of evaporation gas from the interior space with a second gas; thereby providing the prepared sample.

The sample preparation method of the invention may provide the benefit that the evaporation rate of the solvent may be directly controlled by the exchange of the evaporation gas (or "headspace") in the sample holding part (or "vial"). Exchanging an aliquot of atmosphere in the interior space facilitates controlling (exactly) the amount of solvent removed at a certain time. In particular, by (subsequently) removing fractions of solvent - by removing the evaporation gas - it is possible to directly control the duration of solvent evaporation.

Such control may facilitate accurately predicting (or controlling) the soaking endpoint. Hence, the sample preparation method of the invention may facilitate soaking long enough for the analyte to be suitably inserted into the one or more single crystals of the porous framework, while stopping on time to avoid crystals being broken due to running dry. In addition, accurately predicting a suitable endpoint may facilitate process automation, such as facilitating robotic control of the process.

Further, the sample preparation method may have an increased parameter space for soaking as parameters, such as temperature and pressure, that are typically directly related to a soaking duration, may with the method of the invention be controlled independently of the soaking duration. Hence, the sample preparation method of the invention may have an increased parameter space compared to prior art methods.

For instance, the sample preparation method may provide a high evaporation rate at a low temperature, which may avoid the decomposition of fragile analytes, and may avoid the evaporation of volatile analytes.

Similarly, with regards to temperature, soaking may be performed at temperatures well above 100 °C, which may provide (a) improved solubility thereby reducing, especially avoiding, the undesired crystallization of analyte outside of the crystals, and (b) higher molecular mobility, i.e., faster diffusion rates. The sample preparation method may thus facilitate soaking at a high temperature with a slow evaporation rate, which may provide a higher diffusion rate for otherwise slowly diffusing analytes.

Further, controlled evaporation rather than a (passive) exchange with ambient air may (a) avoid health and safety issues with hazardous solvents/substances as the solvents/substances are not directly released into ambient air, and (b) avoid the intrusion of ambient air components.

Hence, the invention may provide a sample preparation method for providing a prepared sample. The prepared sample may especially be suitable for downstream analysis, such as for x-ray analysis, or such as for electron diffraction analysis.

The sample preparation method may comprise one or more of a preparation stage, a loading stage, and an evaporation stage.

The term "stage" and similar terms used herein may refer to a (time) period (also "phase") of a method and/or an operational mode. The different stages may (partially) overlap (in time). For example, the preparation stage may, in general, be initiated prior to the loading stage, but may partially overlap in time therewith. However, for example, the preparation stage may typically be completed prior to the evaporation stage. It will be clear to the person skilled in the art how the stages may be beneficially arranged in time.

In embodiments, the sample preparation method may comprise the preparation stage. The preparation stage may comprise providing a sample holding part. The sample holding part may especially be configured for hosting one or more single crystals of a porous framework. The sample holding part may further be configured to facilitate soaking of the one or more single crystals of the porous framework in a solvent comprising an analyte (see below) in order to introduce the analyte into (at least part of) the one or more single crystals of the porous framework.

The phrases "introduced into the porous single crystal", "introduced in the porous framework", "providing the solvent (comprising the analyte) to the crystal", "loading of the crystal with the analyte" and similar phrases herein may especially refer to the porous single crystal absorbing the analyte, wherein the analyte is essentially trapped at a binding site (of the framework) of the porous single crystal, especially wherein the analyte is rendered oriented and observable for electron diffraction analysis (see further below).

In particular, the sample holding part may be configured for hosting the one or more single crystals of the porous framework and for receiving the analyte. Especially, the sample holding part may comprise an interior space configured for hosting the one or more single crystals of the porous framework. In embodiments, the interior space may host one or more single crystals of the porous framework. In further embodiments, the interior space may be configured for receiving the one or more single crystals of the porous framework, especially wherein the interior space comprises a solvent, or especially wherein the interior space is empty.

The sample holding part, especially the collection chamber, may especially be configured for accommodating the one or more single crystals of the porous framework (herein further also referred to as "crystal", "single porous crystal", "single crystal", "porous crystal", and similar terms, see further below).

The terms "porous single crystal", "the single crystal of the porous framework" and similar terms may herein especially refer to a porous (crystal) compound having a three-dimensional framework and three-dimensionally regularly-arranged pores and/or hollows. The term "single crystal" is especially used indicating that the porous single crystal is especially a monolithic compound. Moreover, the term "(porous) framework" especially refers to a three dimensional framework, especially having three-dimensionally arranged pores. Hence, the term porous crystal of the porous framework may refer to a monolithic porous framework (or compound). In embodiments, the porous single crystal may comprise a crystalline sponge. In further embodiments, the porous single crystal may comprise a porous single crystal as described in EP3269849A1 and/or EP3118610A1, which are hereby herein incorporated by reference.

In embodiments, the porous single crystal, especially (the single crystal of) the porous framework, may comprise a metal-organic framework material. A metal-organic framework material may comprise an organic-inorganic hybrid crystalline porous material comprising an essentially regular array of metal ions (or clusters) surrounded by organic linkers.

The metal-organic framework material may in embodiments be formed of a metal salt ZnX₂, especially where X = Cl or Br or I. In further embodiments, the metal-organic framework material may be tri-pyridinyl triazine (tpt)-based, especially tpt-ZnX₂ based, such as 2 tpt · 3 ZnX₂ based, especially where X comprises an element selected from the group comprising Cl, Br and I. Especially, X = Cl, Br or I. In further embodiments, the metal-organic framework material may comprise a cartridge-based system. In further embodiments, the metal-organic framework material may be tpt-ZnCl₂ based. In further embodiments, the metal-organic framework material may be tpt-ZnBr₂ based. In further embodiments, the metal-organic framework material may be tpt-ZnI₂ based. In further embodiments, ZnX₂, especially tpt-ZnX₂ may comprise two different elements X selected from the group comprising Cl, Br, and I. However, in general, ZnX₂, especially tpt-ZnX₂, may comprise twice the same element selected from the group comprising Cl, Br, and I.

In embodiments, (the single crystal of) the porous framework comprises a metal-organic framework material, wherein the metal-organic framework material is formed of a metal salt ZnX₂ where X = Cl or Br or I.

In further embodiments, (the single crystal of) the porous framework comprises a metal-organic framework material comprising one or more of Mn, Fe, Al, Ni and Cu.

The term "cartridge-based system" may especially refer to a biporous coordination network. The term "biporous coordination network" and similar terms may herein especially refer to a porous coordination network comprising two (or more) distinct large channels, especially wherein the pores are arranged and surrounded by aromatic structures. Such a biporous coordination network may have the ability to take up two (or more) analytes independently, thereby allowing the simultaneous isolation of two different analytes. Such biporous materials may be composed of alternatively layered 2,4,6-tris(4-pyridyl)-1,3,5-triazine (TPT) and triphenylene; especially wherein the TPT ligand forms an infinite 3D network via coordination to ZnI₂, whereas the triphenylene is especially involved in the 3D framework without forming any covalent or coordination bonds with other components. The noncovalently intercalated triphenylene may contain suitable functional groups without causing any change in the biporous coordination networks.

In particular, the term "biporous coordination networks" may especially refer to the coordination networks described by Ohmori et al., 2005, "a Two-in-One Crystal: Uptake of Two Different Guests into Two Distinct Channels of a Biporous Coordination Network", Angewandte Chemie International Edition, 44, 1962-1964 and/or Kawano et al., 2007, "The Modular Synthesis of Functional Porous coordination Networks", Journal of the American Chemical Society, 129, 15418-15419, which are hereby herein incorporated by reference.

Metal organic frameworks formed of ZnX₂ may be particularly suitable given the flexibility due to interpenetrating networks, the electron deficiency due to TPT ligands, and the possibilities to form weak non-covalent type interactions between the porous single crystal and the analyte.

Alternatively, (the single crystal of) the porous framework may comprise (purely) organic materials. The single crystal may in further embodiments comprise a covalent organic framework (COF). Covalent organic frameworks (COFs) may be constructed from organic building units using strong covalent bonds between light atoms (e.g., H, B, C, N, O, P, S, Si).

The single crystal of the porous network may in embodiments comprise a porous, crystalline framework.

In embodiments, the single crystal may be part of an aggregate (of single crystals). However, in general, the single crystal may be non-aggregated. In particular, it may be preferable for the single crystal to be non-aggregated as aggregation may interfere with analyte distribution and analyte dispersion within the crystalline structure and may interfere with obtaining measurements on an organized structure, i.e., the use of non-aggregated single crystals may facilitate obtaining non-overlapping measurement data, which may in general be higher quality data.

In embodiments, the one or more single crystals of the porous framework may (each) have a spherically equivalent diameter ≤ 500 µm, especially ≤ 400 µm, such as ≤ 350 µm, especially ≤ 300 nm. In further embodiments, at least 70%, such as at least 80%, especially at least 90%, of the one or more single crystals of the porous framework may (each) have a spherically equivalent diameter ≤ 500 µm, especially ≤ 400 µm, such as ≤ 350 µm, especially ≤ 300 nm.

In further embodiments, the one or more single crystals of the porous framework may (each) have a spherically equivalent diameter ≥ 50 µm, especially ≥ 80 µm, such as ≥ 100 µm. In further embodiments, at least 70%, such as at least 80%, especially at least 90%, of the one or more single crystals of the porous framework may (each) have a spherically equivalent diameter ≥ 50 µm, especially ≥ 80 µm, such as ≥ 100 µm.

The equivalent spherical diameter (or ESD) (or "spherical equivalent diameter") of an (irregularly shaped) three-dimensional shape is the diameter of a sphere of equivalent volume. For a sphere, the diameter is the same as the equivalent spherical diameter. Would a sphere in an xyz-plane with a diameter D be distorted to any other shape (in the xyz-plane), without changing the volume, then the equivalent spherical diameter of that shape would be D. In further embodiments, the single crystal may have a smallest characteristic dimension (or size), especially a smallest spherically equivalent diameter, of at least 50 nm, such as at least 100 nm, especially at least 200 nm, such as at least 300 nm, even more especially at least 500 nm. The characteristic dimension (size) may especially be 10 µm at maximum, such as 1 µm at maximum. In embodiments, the characteristic dimension (size) of the single crystal may be in the range of 10-2000 nm, especially in the range of 50-1000 nm, such as in the range of 100-800 nm.

In embodiments, the sample holding part may comprise a collection chamber having an interior space. In particular, in embodiments, the interior space may host one or more single crystals of a porous framework.

The interior space may especially be an air-tight interior space, i.e., an (evaporation) gas inside of the interior space may (essentially) not be passively exchanged with a gas external to the interior space. Hence, unless a gas exchange is actively facilitated, the interior space may be fluidically separated from the outside of the collection chamber.

In embodiments, the sample preparation method may further comprise the loading stage. The loading stage may comprise providing a solvent comprising an analyte to the one or more single crystals of the porous framework. Hence, the loading stage may comprise providing a solvent to the interior space. The solvent may especially comprise the analyte.

In further embodiments, the sample holding part, especially the collection chamber, may be configured for receiving the analyte with the solvent. In particular, the solvent may be selected from the group comprising water, hexane, cyclohexane, tetrahydrofuran, dimethylformamide (DMF), methanol and acetone, especially wherein the analyte is dissolved in the solvent. In further embodiments, the solvent may especially be an (organic) solvent selected from the group comprising hexane, cyclohexane, tetrahydrofuran, dimethylformamide (DMF), methanol and acetone. In further embodiments, the solvent may be water. In further embodiments, the solvent may be CO₂, especially supercritical CO₂, or especially liquid CO₂. It will be clear to the person skilled in the art that the solvent may especially be selected in view of compatibility with the analyte, such as for providing satisfactory dissolution of the analyte in the solvent.

Given the exposure of the collection chamber to (organic) solvents, it may be preferably for the collection chamber to comprise a solvent-resistant material. In embodiments, the collection chamber may especially comprise a material selected from the group comprising metals, such as aluminum, glass, quartz, and solvent-resistant polymers, such as polyimide, polypropylene, polyethylene, polyvinylidene difluoride, polychlorotrifluoroethylene polymethylpentene, and polytetrafluoroethylene.

The collection chamber may further be exposed to elevated temperatures and/or pressures to facilitate loading of the single crystals (see below). Hence, the collection chamber may comprise a chamber material selected in view of pressure tolerance, heat tolerance, mechanical stability, and solvent tolerance, especially in view of pressure and heat tolerance. Hence, in embodiments, the sample holding part may comprise one or more of aluminum, such as an aluminum composite, stainless steel, brass, and copper.

In embodiments, the analyte to be sampled/analyzed may comprise a biological sample, such as (originating from) an extract or a tissue sample. Hence, in embodiments, the analyte may comprise a biologically derived analyte. The analyte may further comprise a chemical sample, such as (an analyte taken from) a product stream or a waste stream of a production process. Especially, the analyte may comprise any arbitrary sample comprising an organic molecule. In embodiments, the analyte to be analyzed may comprise an organic molecule. The term "analyte" may especially relate to a molecule to be analyzed or detected, especially a molecule (as) described herein, more especially to an organic molecule (as) described herein. In embodiments, the analyte may comprise an inorganic molecule. The analyte may further comprise a plurality of (different) molecules. However, in general, the analyte may (essentially) comprise a single molecule type, such as a plurality of same molecules, separated from (a remainder of) a sample, such as via chromatography.

The term "organic molecule" herein may refer to any chemical compound that contains carbon, especially a molecule wherein carbon is covalently linked to other elements such as hydrogen, oxygen and nitrogen. In embodiments, the organic molecule may comprise a biological molecule, especially a biological molecule obtained from a biological source, such as a biological molecule produced by an organism, especially a eukaryote or prokaryote, such as by a plant, animal, fungus, bacterium, or archaeum. In further embodiments, the organic molecule may comprise an active substance (also: "active ingredient" or "active constituent"), especially an active substance with biological activity, i.e., an active substance which has a beneficial and/or adverse effect on living matter, such as an active substance with a pharmaceutical, cosmetical, and/or nutraceutical effect or a salt, acid and/or base thereof. The term "organic molecule" may herein also refer to a plurality of organic molecules.

In embodiments, the analyte, especially the organic molecule, may be selected from the group consisting of an organic biomolecule, i.e., the organic molecule may comprise an organic biomolecule.

The analyte may in embodiments be comprised (especially dissolved) by (in) the solvent. For instance, the solvent may be selected for separating the analyte from one or more other components of a sample, such as via chromatography.

In further embodiments, the sample preparation method may comprise the evaporation stage. The evaporation stage may comprise periodically exchanging an aliquot of evaporation gas from the interior space with a second gas (50).

The phrase "periodically exchanging" herein specifically refers to exchanging at distinct timepoints, i.e., not exchanging continuously. In particular, by exchanging periodically, the interior space may repeatedly set into a steady state, due to partial evaporation of the solvent, which may facilitate (precisely) controlling the evaporation rate.

The term "evaporation gas" may herein refer to the (total) gas in the interior space. Generally, the interior space may be essentially filled up with the one or more single crystals, the solvent, and the evaporation gas. The term "evaporation gas" may thus also refer to (part of) a second gas that was previously provided to the interior space. The evaporation gas may typically comprise evaporated solvent as well as one or more other gases, such as one or more inert gases.

The term "aliquot" may herein refer to a part of a larger whole. Specifically, the term "aliquot" may herein refer to a part of the evaporation gas (or "headspace") in the interior space. For instance, in embodiments, the aliquot may comprise at least 0.01 vol% of the evaporation gas in the interior space, such as at least 0.1 vol%, especially at least 1 vol%. In further embodiments, the aliquot may comprise at least 5 vol% of the evaporation gas in the interior space, such as at least 10 vol%.

In further embodiments, the aliquot may comprise at most 20 vol% of the evaporation gas in the interior space, such as at most 10 vol%, especially at most 5 vol%. In further embodiments, the aliquot may comprise at most 1 vol% of the evaporation gas in the interior space, such as at most 0.1 vol%.

Hence, the evaporation stage may comprise periodically removing an aliquot of the evaporation gas from the interior space and adding an (essentially) equal amount of a second gas to the interior space. Practically, the removing of the aliquot of evaporation gas and the adding of the second gas may be temporally separated. However, in embodiments, the removing of the aliquot of evaporation gas and the adding of the second gas may occur simultaneously, i.e., the evaporation stage may comprise (periodically) simultaneously removing an aliquot of the evaporation gas from the interior space and adding an (essentially) equal amount of a second gas to the interior space. In particular, in embodiments, the evaporation stage, especially an exchange event, may comprise adding a second volume of a second gas to the interior space, and subsequently removing the aliquot, which may (essentially) have the same volume as the added second volume of second gas (at the same pressure). For instance, the evaporation stage may comprise adding the second volume of the second gas to the interior space, thereby raising the gas pressure in the interior space from a first pressure to a second pressure, and subsequently releasing the gas pressure from the second pressure to (essentially) the first pressure by allowing the aliquot to exit the interior space. In particular, the gas pressure may be released from the second pressure to a predetermined pressure, which may be lower than the first pressure. The gas pressure in the interior space may be allowed to rise from the predetermined pressure to (about) the first pressure due to evaporation, then be raised further to the second pressure due to addition of the second gas, and may then be lowered to the predetermined pressure, followed by further evaporation. In further embodiments, the evaporation stage, especially an exchange event, may comprise removing an aliquot of evaporation gas (from the interior space) and subsequently adding a second volume of a second gas to the interior space, especially wherein the aliquot and the second volume have (essentially) the same volume (at the same pressure).

Hence, as described above, aliquot of evaporation gas may be removed before, simultaneously with, or after the addition of the second gas. The temporal arrangement of the addition of the second gas and the removal of the evaporation gas may especially be chosen in view of their respective benefits. In particular, the addition of second gas prior to the removal of the aliquot may be particularly easy to implement, and may conveniently use pressure relief to facilitate adding and removing a corresponding volume. The simultaneous exchange may have the benefit that (spontaneous) changes in pressure may be avoided. The removal of the aliquot prior to the addition of the second gas may facilitate more accurately predicting the soaking endpoint time as the evaporation gas (in the interior space) is not mixed prior to or during the removal of the aliquot, and the composition of the evaporation gas in the aliquot can thus be more accurately predicted.

In principle, successive exchange events in the evaporation stage may vary in the order of the addition of the second gas and the removal of the aliquot. However, generally, the order may remain the same throughout the evaporation stage. Hence, in embodiments, the evaporation stage may comprise a plurality of (temporally separated) exchange events. In further embodiments, each of the exchange events may comprise adding a second volume of a second gas to the interior space, and subsequently removing the aliquot (of evaporation gas). In further embodiments, each of the exchange events may comprise removing the aliquot (of evaporation gas), and subsequently adding a second volume of a second gas to the interior space. In further embodiments, each of the exchange events may comprise simultaneously removing the aliquot (of evaporation gas) and adding a second volume of a second gas to the interior space.

The phrase "exchanging an aliquot of evaporation gas from the interior space with a second gas" and similar phrases may herein thus especially refer to the combined acts of removing an aliquot of evaporation gas from the interior space and replacing it with (an equal amount of) a second gas. In particular, the gas pressure in the interior space before an exchange event may be essentially the same as after the exchange event. For instance, the gas pressure in the interior space before and after the exchange event may differ ≤ 10% (relative to the higher gas pressure), such as less than ≤ 5%, especially ≤ 3%, such as ≤ 1%, especially ≤ 0.1%.

The replacement of the aliquot of evaporation gas, which (generally) partially comprises evaporated solvent, with a second gas, may effectively result in a reduction of the partial gas pressure of the (evaporated) solvent. In particular, the reduction of the partial gas pressure of the (evaporated) solvent may facilitate further evaporation of the solvent.

The term "periodically" may herein refer to a set time interval or to a varying time interval. In particular, the interval between subsequent (sets of) exchange events may vary.

The evaporation stage may especially continue until the solvent has almost been fully evaporated. At that point, the analyte may be substantially inserted into the one or more single crystals, and the residual solvent may provide stability to the one or more single crystals. The (doped) single crystals may then be suitable for subsequent analysis. Hence, the sample preparation method may thus provide a prepared sample.

Generally, it may be undesirable for the second gas to interact with the one or more single crystals, the analyte, and the solvent. In embodiments, the second gas may comprise dry air, nitrogen or argon. In further embodiments, the second gas may comprise an inert gas, such as dinitrogen, or such as argon.

Hence, in embodiments, the evaporation stage may comprise periodically exchanging an aliquot of the evaporation gas from the interior space with an inert gas.

In embodiments, the evaporation stage may comprise exchanging aliquots of the evaporation gas (with the second gas) at a plurality of exchange events. Too short durations between successive exchange events may leave insufficient time for equilibrium (or "steady state conditions") to establish, whereas too long durations may unnecessarily extend soaking time. In particular, by allowing equilibrium to establish, the composition of the evaporation gas may be (relatively) accurately predicted, which may facilitate determining the soaking endpoint. Hence, in embodiments, (temporally) successive exchange events may be separated by (independently selected) durations (or "intervals") selected from the range of 1 - 60 min. In further embodiments, the durations may be (independently) selected from the range of ≥ 0.5 min, such as from the range of ≥ 1 min, especially from the range of > 3 min, such as from the range of ≥ 5 min. In further embodiments, the durations may be (independently) selected from the range of ≤ 300 min, especially from the range of ≤ 120 min, such as from the range of ≤ 60 min, especially from the range of ≤ 40 min, such as from the range of ≤ 20 min.

In further embodiments, the evaporation stage may comprise exchange events at a frequency selected from the range of 0.5 - 120 h⁻¹, such as from the range 1 - 60 h⁻¹, especially from the range of 6 - 30 h⁻¹.

As described above, the exchange of the evaporation gas with the second gas may provide control over the evaporation of the solvent. Hence, in embodiments, the evaporation stage may comprise controlling an evaporation rate of the solvent by controlling the exchange of the evaporation gas.

Typically, a volume of about 20 - 50 µL of solvent may be used for the soaking of the one or more single crystals. However, other volumes of solvent may also be used.

In embodiments, such as in embodiment with 20 - 50 µL of solvent, the sample preparation method may comprise subjecting the interior space, especially the solvent, to an evaporation rate selected from the range of 0.01 - 50 mg/h, such as from the range of 0.1 - 10 mg/h, especially from the range of 0.5 - 5 mg/h, such as from the range of 1 - 3 mg/h.

In further embodiments, such as in embodiment with 20 - 50 µL of solvent, the sample preparation method may comprise subjecting the interior space, especially the solvent, to an evaporation rate selected from the range of 0.004 to 40µL/h, such as from the range of 0.04 to 4µL/h, especially from the range of 0.2 to 2 µL/h.

In embodiments, the loading stage may comprise providing X µL of solvent, especially wherein X is selected from the range of 1 - 1000 µL, especially from the range of 5 - 500 µL, such as from the range of 10 - 50 µL. In further embodiments, the sample preparation method may comprise subjecting the interior space, especially the solvent, to an evaporation rate selected from the range of 0.0001^{∗}X/h - 1^{∗}X/h, such as selected from the range of 0.001^{∗}X/h - 0.2^{∗}X/h, especially from the range of 0.01^{∗}X/h - 0.1^{∗}X/h, especially from the range of 0.02^{∗}X/h - 0.05^{∗}X/h.

Further, as described above, the sample preparation method of the invention may facilitate controlling environmental parameters independent of the evaporation rate.

Hence, in embodiments, the evaporation stage may comprise subjecting the interior space to a temperature selected from the range of -70 - 250 °C, such as from the range of -50 - 200 °C, especially from the range of 20 - 100 °C. In further embodiments, the evaporation stage may comprise subjecting the interior space to a temperature selected from the range of 4 - 50 °C, such as from the range of 25 - 50 °C. In further embodiments, the evaporation stage may comprise subjecting the interior space to a temperature ≥ -50 °C, such as ≥ -20 °C, especially ≥ 0 °C, such as ≥ 20 °C. In further embodiments, the evaporation stage may comprise subjecting the interior space to a temperature ≥ 50 °C, such as ≥ 80 °C, especially ≥ 100 °C, such as ≥ 120 °C. In further embodiments, the evaporation stage may comprise subjecting the interior space to a temperature ≤ 200 °C, such as ≤ 150 °C, especially ≤ 100 °C, such as ≤ 80 °C. In further embodiments, the evaporation stage may comprise subjecting the interior space to a temperature ≤ 50 °C, such as ≤ 30 °C, especially ≤ 0 °C, such as ≤ -20 °C.

In further embodiments, the evaporation stage may comprise subjecting the interior space to a pressure selected from the range of -0.5 - 2 barg, especially from the range of -0.2 - 1 barg, such as from the range of 0 - 1 barg, especially from the range of 0.01 - 1 barg. Herein, the term "barg" may refer to a pressure in bar (105 N/m²) in excess of (local) atmospheric pressure.

Hence, the sample preparation method of the invention may facilitate controlling the evaporation rate, the temperature, and the pressure independently of one another to provide suitable soaking conditions considering, for instance, the one or more single crystals of the porous framework, the solvent, and the analyte.

For instance, in embodiments, the evaporation rate may be selected from the range of 0.1 - 10 mg/h, the pressure may be selected from the range of 0-1 barg, especially from the range of 0.1-1 barg, and the temperature may be selected from the range of 50 - 180 °C. Such conditions may provide a (relatively) high temperature and pressure for soaking, while without subjecting the solvent to an excessive evaporation rate. For instance, such embodiments may provide for an increased solubility of the analyte, thus avoiding undesirable analyte crystallization, as well as faster diffusion rates.

In contrast, in further embodiments, the evaporation rate may be selected from the range of 1 - 10 mg/h, and the temperature may be selected from the range of ≤ 20 °C. Such embodiments may be particularly beneficial for fragile and/or volatile analytes, as the evaporation rate may be kept (relatively) high, which may be desirable for process efficiency, without substantially decomposing or evaporating the analytes.

In particular, in embodiments, the evaporation stage may comprise (essentially) isothermally varying the evaporation rate, such as decreasing the evaporation rate over time. Such embodiments may facilitate providing more time with higher analyte concentrations, which may provide an increased driving force for diffusion. For instance, in embodiments, the evaporation stage may comprise varying the evaporation rate while maintaining the temperature (of the interior space) within 10% of a target temperature (in degrees Celsius), such as within 5%, especially within 3%, such as within 1%. In further embodiments, the target temperature may be selected from the range of -70 - 250 °C, such as from the range of -50 - 200 °C, especially from the range of 20 - 100 °C.

In further embodiments, the evaporation stage may comprise varying the temperature at an (essentially) constant evaporation rate, such as decreasing the temperature over time. Such embodiments may facilitate providing higher diffusion rates at the start, and lower entropy at the end, thereby providing less disorder (or: "more order") in the crystals. For instance, in embodiments, the evaporation stage may comprise varying the temperature while maintaining the evaporation rate (of the solvent) within 10% of a target evaporation rate, such as within 5%, especially within 3%, such as within 1%. In further embodiments, the target evaporation rate may be selected from the range of 0.01 - 50 mg/h, such as from the range of 0.1 - 10 mg/h, especially from the range of 0.5 - 5 mg/h, such as from the range of 1 - 3 mg/h.

As the evaporation rate may essentially be controlled via the exchange of the evaporation gas with the second gas, the soaking endpoint time of the sample preparation method may be accurately predicted. In particular, the term "soaking endpoint time" may herein refer to the timepoint at which sufficient solvent has been evaporated such that the analyte is inserted into the one or more porous single crystals, while the crystals have not yet run dry. Hence, the term "soaking endpoint" may herein especially refer to a state at which sufficient solvent has been evaporated such that the analyte is inserted into the one or more porous single crystals, while the crystals have not yet run dry.

Hence, in embodiments, the sample preparation method may further comprise a prediction stage. The prediction stage may comprise predicting a soaking endpoint time at which selected from the range of 95 - 100 vol of the solvent has evaporated, such as wherein 97 - 99.9 vol% of the solvent has evaporated, such as at least 99 vol%. Hence, the prediction stage may comprise predicting a soaking endpoint time at which a predetermined percentage of the solvent has evaporated, especially wherein the predetermined percentage is selected from the range of 95 - 100 vol%. In such embodiments, the sample preparation method may further comprise terminating the evaporation stage at the (predicted) soaking endpoint time. Thereby, the sample preparation method of the invention may consistently provide prepared samples suitable for downstream analyses.

In further embodiments, the prediction stage may comprise predicting a soaking endpoint time at which 0.2 - 3 µL of solvent remains, such as 0.5 - 2 µL of solvent. In further embodiments, the prediction stage may comprise predicting a soaking endpoint time at which at least 0.2 µL of solvent remains, especially at least 0.5 µL of solvent, such as at least 1 µL of solvent. In further embodiments, the prediction stage may comprise predicting a soaking endpoint time at which 0.002^{∗}X - 25^{∗}X of solvent (see above) remains, such as 0.01^{∗}X - 0.1^{∗}X of solvent. In further embodiments, the prediction stage may comprise predicting a soaking endpoint time at which at least 0.002^{∗}X of solvent remains, especially at least 0.01^{∗}X of solvent, such as at least 0.02^{∗}X of solvent.

In further embodiments, the sample preparation method may comprise stopping the evaporation stage when the soaking endpoint (or soaking endpoint time) is reached.

In further embodiments, the sample preparation method may comprise stopping the evaporation stage when 0.002^{∗}X - 25^{∗}X of solvent (see above) remains, such as 0.01^{∗}X - 0.1^{∗}X of solvent.

In particular, in further embodiments, the prediction stage may comprise measuring the solvent content (or "solvent concentration") in exchanged evaporation gas, i.e., in the aliquot of evaporation gas removed in the evaporation stage, especially at an exchange event, and may comprise predicting the soaking endpoint based on the solvent content. In particular, the concentration level may be indicative of the remaining solvent and/or of the evaporation rate.

As the soaking endpoint time may be accurately determined for the sample preparation method of the invention, the sample preparation method of the invention may also be particularly suitable for automation. In particular, soaking controlled by a robotic apparatus can stop after the last exchange with crystals remaining intact (no further loss of solvent) without intervention of a user, optionally for a long time (e.g. to cover a weekend/holiday).

Such automation may further facilitate subjecting the crystals and analyte to complex soaking protocols (essentially) without danger of damaging the crystals. In embodiments, the soaking may, for instance, be remotely controlled: agile, on-the-fly change of soaking protocol may be possible.

Hence, in embodiments, the sample preparation method, especially the evaporation stage, may be automated (also see below), especially via a robotic apparatus.

In a further aspect, the invention may provide an analysis method. The analysis method may especially comprise providing a prepared sample obtainable by the sample preparation method according to the invention. In particular, the analysis method may comprise the sample preparation method of the invention. The analysis method may further comprise an analysis stage. In embodiments, the analysis stage may comprise subjecting the prepared sample to an analysis, especially a structure elucidation analysis. In further embodiments, the analysis stage may comprise subjecting the prepared sample to an electron diffraction analysis and/or a single crystal X-ray analysis to provide an analysis signal, especially to an electron diffraction analysis, or especially to a single crystal X-ray analysis.

In further embodiments, the analysis stage may comprise subjecting the prepared sample to an electron diffraction analysis to provide an electron diffraction signal. Hence, the analysis signal may comprise the electron diffraction signal.

In further embodiments, the analysis stage may comprise subjecting the prepared sample to an X-ray analysis to provide an X-ray signal. Hence, the analysis signal may comprise the X-ray signal.

In embodiments, the analysis method may comprise an analyte identification stage. The analyte identification stage may in embodiments comprise comparing the analysis signal to reference analysis signals comprising structure-related information pertaining to reference analytes, especially reference molecules. Additionally or alternatively, the identification stage may comprise determining (or "predicting") a structure of the analyte based on the analysis signal.

In further embodiments, the identification stage may comprise comparing the analysis signal to reference analysis signals comprising structure-related information pertaining to reference organic molecules. The reference analysis signals may be obtained from a database. Hence, in further embodiments, the identification stage may comprise comparing the analysis signal to reference analysis signals from a database, especially wherein the reference analysis signals comprise structure-related information pertaining to reference analytes, especially reference organic molecules.

In a further aspect, the invention may provide a system, especially a system for providing a prepared sample. The system may comprise a hosting element and an evaporation element. The hosting element may especially be configured to host a sample holding part comprising a collection chamber having an interior space, wherein the interior space is configured to host one or more single crystals of a porous framework. The evaporation element (or "gas exchange element") may especially be configured to control a periodical gas exchange with the interior space.

Hence, in specific embodiments, the system may comprise (i) a hosting element configured to host a sample holding part comprising a collection chamber having an interior space, wherein the interior space is configured to host one or more single crystals of a porous framework, and (ii) an evaporation element configured to control a periodical gas exchange with the interior space.

The system may especially be configured to execute the method of the invention.

The evaporation element may especially be configured to, during operation of the system, exchange an aliquot of evaporation gas in the interior space with a second gas. Hence, the system may especially comprise a second gas supply configured to provide the second gas. In embodiments, the evaporation element may be configured to remove an aliquot of evaporation gas from the interior space and to provide a (matching) amount of the second gas to the interior space.

In further embodiments, the evaporation element may, at an exchange event, be configured to provide an amount of the second gas to the interior space, and to subsequently remove an aliquot of evaporation gas from the interior space.

In embodiments, the system may comprise an analyte handling element configured to provide a (first) solvent comprising an analyte to the interior space of the sample holding part. In further embodiments, the analyte handling element may be further configured to provide a second solvent (without analyte) to the interior space of the sample holding part. The second solvent may especially be a different solvent than the (first) solvent. In embodiments, the second solvent may also be the same solvent as the (first) solvent.

In embodiments, the evaporation element may be configured to, during operation, control an evaporation rate (of the solvent) at a value selected from the range of 0.01 - 50 mg/h, such as from the range of 0.1 - 10 mg/h, especially from the range of 0.5 - 5 mg/h, such as from the range of 1 - 3 mg/h.

In further embodiments, such as in embodiment with 20 - 50 µL of solvent, the evaporation element may be configured to, during operation, subject the interior space, especially the solvent, to an evaporation rate selected from the range of 0.004 to 40µL/h, such as from the range of 0.04 to 4µL/h, especially from the range of 0.2 to 2 µL/h.

In embodiments, the analyte handling element may be configured to provide X µL of solvent to the interior space, especially wherein X is selected from the range of 1 - 1000 µL, especially from the range of 5 - 500 µL, such as from the range of 10 - 50 µL. In further embodiments, the evaporation element may be configured to, during operation, subject the interior space, especially the solvent, to an evaporation rate selected from the range of 0.0001^{∗}X/h - 1^{∗}X/h, such as selected from the range of 0.001^{∗}X/h - 0.2^{∗}X/h, especially from the range of 0.01^{∗}X/h - 0.1^{∗}X/h, especially from the range of 0.02^{∗}X/h - 0.05^{∗}X/h.

Further, as described above, the sample preparation method of the invention may facilitate controlling environmental parameters independent of the evaporation rate.

Hence, in embodiments, the system may further comprise a temperature control element. The temperature control element may be configured to control a temperature in the interior space at a value selected from the range of -50 - 200 °C. In further embodiments, the temperature control element may be configured to control the temperature in the interior space (at a value selected from with)in the range of -70 - 250 °C, such as in the range of -50 - 200 °C, especially in the range of 20 - 100 °C In further embodiments, the temperature control element may be configured to control the temperature in the interior space (at a value selected from with)in the range of ≥ -50 °C, such as ≥ -20 °C, especially ≥ 0 °C, such as ≥ 20 °C. In further embodiments, the temperature control element may be configured to control the temperature in the interior space (at a value selected from with)in the range of > 50 °C, such as ≥ 80 °C, especially ≥ 100 °C, such as ≥ 120 °C. In further embodiments, the temperature control element may be configured to control the temperature in the interior space (at a value selected from with)in the range of ≤ 200 °C, such as ≤ 150 °C, especially ≤ 100 °C, such as ≤ 80 °C In further embodiments, the temperature control element may be configured to control the temperature in the interior space (at a value selected from with)in the range of ≤ 50 °C, such as ≤ 30 °C, especially ≤ 0 °C, such as ≤ -20 °C.

In further embodiments, the system may comprise a pressure control element. In such embodiments, the pressure control element may be configured to control a pressure in the interior space (at a value selected from with) in the range of -0.5 - 2 barg, especially in the range of -0.2 - 1 barg, such as in the range of 0 - 1 barg, especially in the range of 0.01 - 1 barg.

The system may further comprise a control system. The control system may especially be configured to control one or more of the hosting element, the analyte handling element, and the evaporation element, especially at least the hosting element, or especially at least the analyte handling element, or especially at least the evaporation element. In further embodiments, the control system may be configured to control the temperature control element. In further embodiments, the control system may be configured to control the pressure control element.

The system, especially the control system, may have an operational mode. The term "operational mode" may also be indicated as "controlling mode". The system, or apparatus, or device (see further also below) may execute an action in a "mode" or "operational mode" or "mode of operation". Likewise, in a method an action, stage, or step may be executed in a "mode" or "operation mode" or "mode of operation". This does not exclude that the system, or apparatus, or device may also be adapted for providing another operational mode, or a plurality of other operational modes. Likewise, this does not exclude that before executing the mode and/or after executing the mode one or more other modes may be executed. However, in embodiments a control system (see further also below) may be available, that is adapted to provide at least the operational mode. Would other modes be available, the choice of such modes may especially be executed via a user interface, though other options, like executing a mode in dependence of a sensor signal or a (time) scheme, may also be possible. The operational mode may in embodiments also refer to a system, or apparatus, or device, that can only operate in a single operation mode (i.e. "on", without further tunability).

The term "controlling" and similar terms herein may especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element. The controlling of the element can be done with a control system. The control system and the element may thus at least temporarily, or permanently, functionally be coupled. The element may comprise the control system. In embodiments, the control system and the element may not be physically coupled. Control can be done via wired and/or wireless control. The term "control system" may also refer to a plurality of different control systems, which especially are functionally coupled, and of which e.g. one master control system may be a control system and one or more others may be slave control systems.

Hence, in embodiments, the system, especially the control system, may have an operational mode. The operational mode may especially comprise one or more of a preparation stage and an evaporation stage. The system may especially be configured to provide a prepared sample by executing the operational mode.

In the preparation stage, in embodiments, the hosting element may (be configured to) host the sample holding part, wherein the interior space hosts the one or more single crystals of the porous framework. In further embodiments, the sample holding part may further comprise a solvent comprising an analyte. In particular, the collection chamber may comprise the solvent comprising the analyte.

In further embodiments, the operational mode may further comprise a loading stage. In the loading stage, the system, especially the analyte handling element, may (be configured to) provide the solvent (comprising the analyte) to the one or more single crystals of the porous framework. Hence, in the loading stage, the system, especially the analyte handling element, may (be configured to) provide the solvent (comprising the analyte) to the collection chamber.

In the evaporation stage, in embodiments, the evaporation element may (be configured to) periodically exchange an evaporation gas from the interior space with a second gas.

In embodiments, the operational mode may further comprise a prediction stage. In the prediction stage, the control system may (be configured to) predict a soaking endpoint time at which 95 - 99.9 vol% of the solvent has evaporated, especially at which at least 97 vol% of the solvent has evaporated, such as at least 99 vol%. In such embodiments, the control system may (be configured to) terminate the evaporation stage at the (predicted) soaking endpoint time.

In further embodiments, the system may further comprise a sensor element. The sensor element may, especially in the evaporation stage, (be configured to) detect a solvent presence (of the solvent) in the evaporation gas exchanged, and especially to provide a concentration-related signal to the control system. In such embodiments, in the prediction stage, the control system may (be configured to) predict the soaking endpoint time (at least partially) based on the concentration-related signal.

The term "concentration-related signal" may herein refer to a signal that is related to the detected concentration. In particular, the concentration-related signal may comprise raw and/or processed data related to the (detected) solvent concentration in the exchanged evaporation gas.

In further embodiments, especially in the prediction stage, the control system may (be configured to) determine the soaking endpoint time based on one or more of the evaporation rate, the temperature (in the interior space), and the pressure (in the interior space).

The system may be configured to operate autonomously or based on user input. However, in embodiments, the system may further be configured to operate based on input from an external resource. In particular, in embodiments, the control system may be configured to communicate with an external resource, especially an online resource. In embodiments, the external resource may, for instance, comprise a database. In further embodiments, the external resource may comprise a cloud service. In such embodiments, the control system may especially be configured to provide input data to the external resource, wherein the input data comprises one or more of analyte-related data, solvent-related data, and concentration-related data, such as the concentration-related signal. The external resource may especially provide information or instructions on suitable, especially (theoretically) ideal, operational (soaking) parameters based on the input data. In particular, the control system may be configured to acquire, especially receive, operational parameters from the external resource. In such embodiments, the control system may especially be configured to control the evaporation element based on the operational parameters.

Thereby, the system may operate with a large degree of autonomy. In embodiments, the system may be configured to operate (essentially) automatically, in particular from receiving (a solvent comprising) an analyte from a user or a functionally coupled system to providing a prepared sample (to a user or a functionally coupled analysis system).

In further embodiments, the system may comprise an analysis unit. In such embodiments, the operational mode may especially further comprise an analysis stage. The analysis unit may, especially in the analysis stage, (be configured to) subject a prepared sample to an analysis, especially a structure elucidation analysis, and to provide an analysis signal to the control system. In further embodiments, the analysis stage may comprise subjecting the prepared sample to an electron diffraction analysis and/or a single crystal X-ray analysis to provide an analysis signal to the control system.

In further embodiments, the analysis unit may, especially in the analysis stage, (be configured to) subject the prepared sample to an electron diffraction analysis to provide an electron diffraction signal to the control system. Hence, the analysis unit may comprise an electron diffraction analysis unit.

In further embodiments, the analysis unit may, especially in the analysis stage, (be configured to) subject the prepared sample to an x-ray analysis to provide an x-ray signal to the control system. Hence, the analysis unit may comprise an x-ray analysis unit.

In further embodiments, the system, especially the control system, may further comprise a structure determination system, wherein the structure determination system is configured to determine the structure of the analyte based on the analysis signal.

In embodiments, the operational mode may comprise an analyte identification stage. In embodiments, especially in the analyte identification stage, the control system may (be configured to) compare the analysis signal to reference analysis signals comprising structure-related information pertaining to reference analytes, especially reference molecules. Additionally or alternatively, especially in the analyte identification stage, the control system may (be configured to) determine (or "predict ") a structure of the analyte based on the analysis signal.

In further embodiments, especially in the identification stage, the control system may (be configured to) compare the analysis signal to reference analysis signals comprising structure-related information pertaining to reference organic molecules. The reference analysis signals may be obtained from a database. Hence, in further embodiments, especially in the identification stage, the control system may (be configured to) compare the analysis signal to reference analysis signals from a database, especially wherein the reference analysis signals comprise structure-related information pertaining to reference analytes, especially reference organic molecules.

In embodiments, the system may be configured to execute the sample preparation method and/or the analysis method of the invention (see above), especially the sample preparation method, or especially the analysis method.

The embodiments described herein are not limited to a single aspect of the invention. For example, an embodiment describing the method may, for example, further relate to the system, especially to an operational mode of the system, or especially to the control system. Similarly, an embodiment of the system describing an operation of the system may further relate to embodiments of the method. In particular, an embodiment of the method describing an operation (of the system) may indicate that the system may, in embodiments, be configured for and/or be suitable for the operation. Similarly, an embodiment of the system describing actions of (a stage in) an operational mode may indicate that the method may, in embodiments, comprise those actions.

### BRIEF DESCRIPTION OF THE DRAWINGS

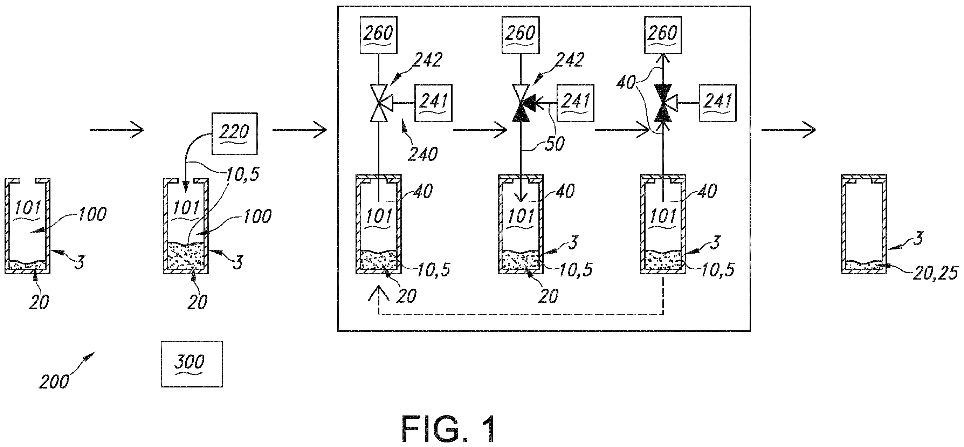

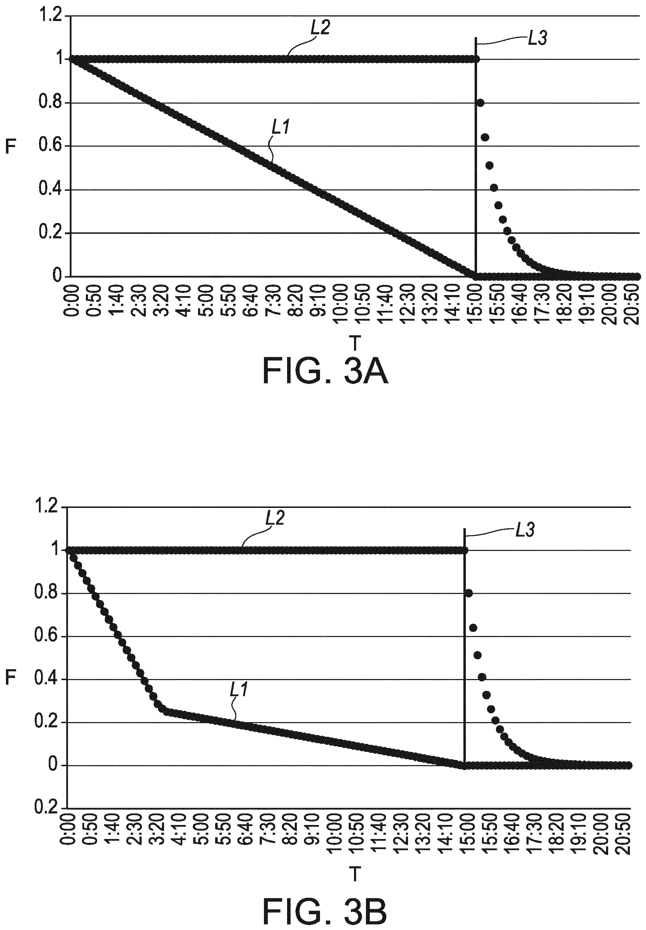

Embodiments of the invention will now be described, by way of example only, with reference to the accompanying schematic drawings in which corresponding reference symbols indicate corresponding parts, and in which: Fig. 1-2 schematically depict embodiments of the sample preparation method and the system. Fig. 3A-D schematically depict embodiments of the sample preparation method. The schematic drawings are not necessarily on scale.

### DETAILED DESCRIPTION OF THE EMBODIMENTS

Fig. 1 schematically depicts an embodiment of the sample preparation method. In the depicted embodiment, the sample preparation method comprises a preparation stage, a loading stage, and an evaporation stage. The preparation stage comprises providing a sample holding part 3, wherein the sample holding part 3 comprises a collection chamber 100 having an interior space 101, wherein the interior space 101 hosts one or more single crystals of a porous framework 20. In embodiments, the interior space 101 may be an air-tight interior space 101, for instance with a septum arranged in an opening of the collection chamber 100 to block passive fluid flow. The loading stage may comprise providing a solvent 10 comprising an analyte 5 to the one or more single crystals of the porous framework 20. The evaporation stage may comprise periodically exchanging an aliquot of evaporation gas 40 from the interior space 101 with a second gas 50. Thereby, the sample preparation method may provide the prepared sample 25.

Specifically, in the depicted embodiment the sample holding part 3 is depicted with a cap with a septum, through which a gas may be (periodically) actively exchanged. In particular, in the evaporation stage, evaporation may be allowed to proceed till (essentially) a steady state is reached with respect to the solvent 10 and evaporated solvent in the evaporation gas 40. Following the arrival at (about) steady state conditions an exchange event is initiated. In the exchange event, in the depicted embodiment, first a second gas 50, especially an inert gas, is provided to the interior space 101 thereby reducing the relative amount of the evaporated solvent in the evaporation gas 40. Subsequently in the exchange event, an aliquot of the evaporation gas 40 is released by relieving an overpressure from the interior space 101. Then, the collection chamber is again left to set into steady state conditions, to be followed by a subsequent exchange event. The evaporation stage may thus comprise a plurality of (temporally) successive exchange events. As described above, in further embodiments, the addition of the second gas may also occur simultaneously with or subsequently to the removal of an aliquot of the evaporation gas.

Hence, in embodiments, the evaporation stage may comprise exchanging aliquots of the evaporation gas 40 (with the second gas 50) at a plurality of exchange events. In such embodiments, (temporally) successive exchange events may be separated by (independently selected) durations selected from the range of 0.5 - 300 min, such as from the range of 1 - 60 min, especially from the range of 2 - 30 min. In further embodiments, each aliquot may comprise at least 0.01 vol% of the evaporation gas in the interior space 101, such as at least 0.1 vol.%, especially at least 0.5 vol%. Hence, in embodiments, at each exchange event, at least 0.01 vol%, such as at least 0.1 vol.%, especially at least 0.5 vol%, of the evaporation gas in the interior space 101 may be exchanged.

The sample preparation method of the invention may facilitate setting a desired evaporation rate, particularly (essentially) independent of temperature and/or pressure (see above). In embodiments, the sample preparation method, especially the evaporation stage, may comprise subjecting the interior space, especially the solvent, to an evaporation rate selected from the range of 0.1 - 10 mg/h, such as selected from the range of 0.2 - 5.0 mg/h.

In the depicted embodiment, the sample preparation method may further comprise a prediction stage comprising predicting a soaking endpoint time at which 95 - 100 vol% of the solvent has evaporated, such as at which 97 - 99.9 vol% of the solvent has evaporated. In particular, in the depicted embodiment, the sample preparation method may comprise detecting a solvent presence in the exchanged evaporation gas 40, such as at (or with) sensor element 260, and providing a concentration-related signal, and the prediction stage may comprise determining the soaking endpoint time (at least partially) based on the concentration-related signal.

In such embodiments, the sample preparation method may especially comprise terminating the evaporation stage at the (predicted) soaking endpoint time. Thereby, the one or more single crystals 20 in the prepared sample 25 may comprise a substantial proportion of the analyte added in the loading stage, while not having run dry of solvent 10, which could otherwise result in crystal damage.

The prepared sample 25 may especially be (directly) suitable for downstream analysis. In particular, the invention may in a further aspect provide an analysis method comprising (a) providing a prepared sample 25 obtainable by the sample preparation method, and (b) an analysis stage comprising subjecting the prepared sample 25 to electron diffraction analysis or single crystal X-ray analysis to provide an analysis signal.

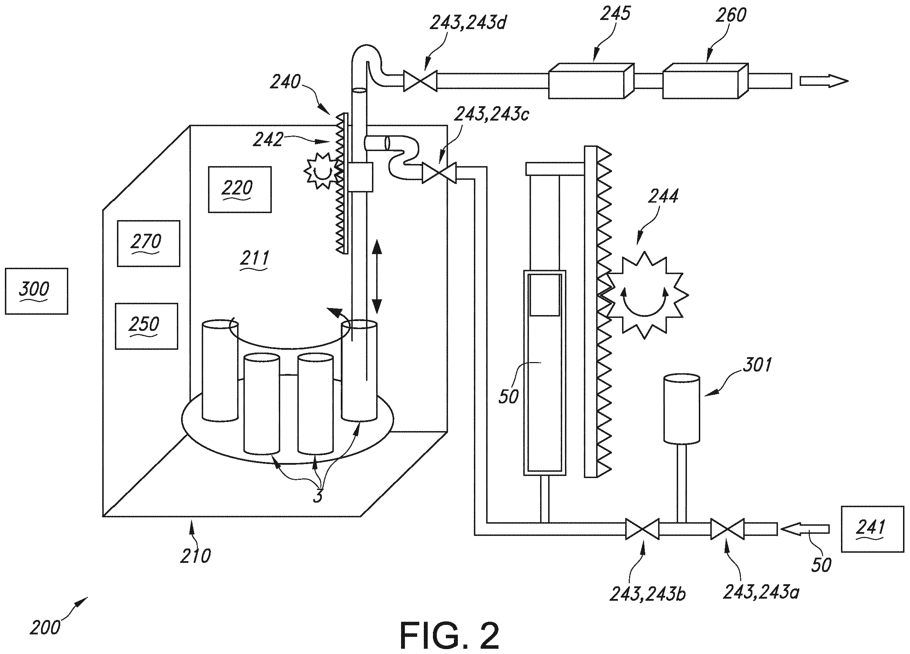

Fig. 2 schematically depicts an embodiment of the system 200. In the depicted embodiment, the system comprises a hosting element 210 and an evaporation element 240. The hosting element 210 is especially configured to host a sample holding part 3. In particular, in the depicted embodiment, the hosting element 210 is configured to host a plurality of sample holding parts 3, and is configured to select a sample holding part to engage with the evaporation element 240. Each sample holding part may especially comprise a (respective) collection chamber 100 having an interior space 101, wherein the interior space 101 is configured to host one or more single crystals of a porous framework 20. The evaporation element 240 may be configured to control a periodical gas exchange with the interior space 101.

In the depicted embodiment, the evaporation element 240 especially comprises a second gas supply 241, a connector element 242, a plurality of valves 243, a gas exchange volume controller 244, and a back pressure regulator 245.

In particular, in the depicted embodiment, especially in the evaporation stage, the hosting element 210 may move a selected sample holding part 3 into a position for engagement with the evaporation element 240. The evaporation element 240 may engage with the selected sample holding part 3, such as by insertion of a needle into the selected sample holding part 3. The evaporation element 240 may open a first valve 243a such that the second gas 50 may flush the connections and may flow through a second gas pressure controller 301. Subsequently, a second valve 243b may open to allow the second gas 50 to flow further. The gas exchange volume controller 244 may then collect a specified volume of second gas 50. The first valve 243a may close, and excess pressure may be relieved / regulated through the second valve 243b and the second gas pressure controller 301. Then, the second valve 243b may close, and a third valve 243c may open, following which the second gas 50 may be provided from the second gas exchange volume controller 244 to the interior space 101 via the connector element 242. Hereafter, the third valve 243c may close and the fourth valve 243d may open to relieve excess pressure in the collection chamber 100. Optionally, the relief of the excess pressure may be regulated by the back pressure regulator 245, and may subsequently be provided to a sensor element 260. Hereafter, the fourth valve 243d may be closed, the evaporation element 240 may disengage from the selected sample holding part 3, and the hosting element 210 may position a second sample holding part 3 for engagement with the evaporation element 240.

Further, in the depicted embodiment, the hosting element 210 provides a (sealed) hosting space 211 to facilitate controlling environmental parameters that the sample holding parts 3, and thereby the interior spaces 101, are exposed to.

In the depicted embodiment, the system 200 further comprises a temperature control element 270 configured to control a temperature in the hosting space 211, especially in the interior space 101. In particular, the temperature control element 270 may (be configured to) control a temperature in the interior space 101 at a value selected from the range of -50 - 200 °C.

Similarly, the system 200 may, in embodiments, comprise a pressure control element 250 configured to control a pressure in the hosting space 211, especially in the interior space 101, such as in the range of -0.2 - 1 barg.

In the depicted embodiment, the system further comprises an analyte handling element 220 configured to provide a solvent 10 comprising an analyte 5 to the interior space 101 of the sample holding part 3.

The depicted system 200 further comprises a control system 300. In embodiments, the control system 300 may be configured to control the hosting element 210. In further embodiments, the control system 300 may be configured to control the analyte handling element 220. In further embodiments, the control system 300 may be configured to control the evaporation element 240. In further embodiments, the control system 300 may be configured to control the pressure control element 250. In further embodiments, the control system 300 may be configured to control the temperature control element 270.

In embodiments, the system 200, especially the control system 300, may further have an operational mode. The operational mode may especially comprise a preparation stage and an evaporation stage. The preparation stage may comprise the hosting element 210 hosting the sample holding part 3, wherein the interior space 101 hosts the one or more single crystals of the porous framework 20. The evaporation stage may comprise the evaporation element 240 periodically exchanging an evaporation gas 40 from the interior space 101 with a second gas 50. Thereby the system 200 may provide the prepared sample 25.

In embodiments, the operational mode may further comprise a loading stage. The loading stage may comprise the analyte handling element 220 providing the solvent 10 (comprising the analyte 5) to the interior space 101 (of a sample holding part 3), especially to the one or more single crystals of the porous framework 20.

In further embodiments, the operational mode may further comprise a prediction stage. The prediction stage may comprise the control system 300 predicting a soaking endpoint time at which 95 - 100 vol% of the solvent has evaporated, especially at which 97 - 99.9 vol% of the solvent has evaporated. In such embodiments, especially in the operational mode, the control system may (be configured to) terminate the evaporation stage at the (predicted) soaking endpoint time.

In the depicted embodiment, the system 200 further comprises a sensor element 260. The sensor element 260 may be configured to detect a solvent presence (of the solvent) in the evaporation gas 40 exchanged during the evaporation stage and to provide a concentration-related signal to the control system 300. In such embodiments, especially in the prediction stage, the control system may (be configured to) predict the soaking endpoint time (at least partially) based on the concentration-related signal.

In further embodiments, the control system may (be configured to) determine the soaking endpoint time based on one or more of the evaporation rate, the temperature, and the pressure.

The control system 300 may, in embodiments, operate essentially autonomously, but may also be in communication with an external resource, such as a database, for determining operational parameters. Hence, in embodiments, the control system 300 may be configured to communicate with an external resource, especially an online resource. In such embodiments, the control system 300 may (be configured to) provide input data to the external resource, wherein the input data comprises one or more of analyte-related data, solvent-related data, and concentration-related data, such as the concentration-related signal. Further, in such embodiments, the control system 300 may (be configured to) acquire, especially receive, operational parameters from the external resource. In particular, especially in the evaporation stage, the control system 300 may (be configured to) control the evaporation element based on the (acquired) operational parameters.

Fig. 2 further schematically depicts an embodiment of the sample preparation method. In particular, Fig. 2 schematically depicts an embodiment of the sample preparation method in which environmental parameters of the interior space may be (actively) controlled.

In further embodiments, the sample preparation method, especially (at least part of) the evaporation stage, may comprise subjecting the interior space to a temperature selected from the range of -50 - 200 °C, especially selected from the range of 20 - 180 °C.

In further embodiments, the sample preparation method, especially (at least part of) the evaporation stage, may comprise subjecting the interior space to a pressure selected from the range of -0.2 - 1 barg, especially selected from the range of 0.1 - 1 barg.

Fig. 3A-D schematically depict simulated results of embodiments of the sample preparation method of the invention. In particular, each of Fig. 3A-D schematically depicts the fractions F of liquid solvent (line L1) and solvent concentration (line L2), respectively, over time T (in hours:minutes), relative to the respective amounts at timepoint t=0, for different soaking ramps. Line L3 corresponds to the soaking endpoint. Each dot corresponds to an exchange event.

In particular, Fig. 3A schematically depicts an embodiment of the sample preparation method wherein a constant evaporation rate is imposed over time, and wherein the soaking endpoint is set at the solvent being (essentially) fully evaporated.

Fig. 3B schematically depicts an embodiment of the sample preparation method with fast evaporation at the start followed by slower evaporation from about t=3:00 onwards by reducing the aliquot volume.

Hence, in the depicted embodiment, the evaporation stage comprises controlling an evaporation rate of the solvent by controlling the exchange of the evaporation gas.

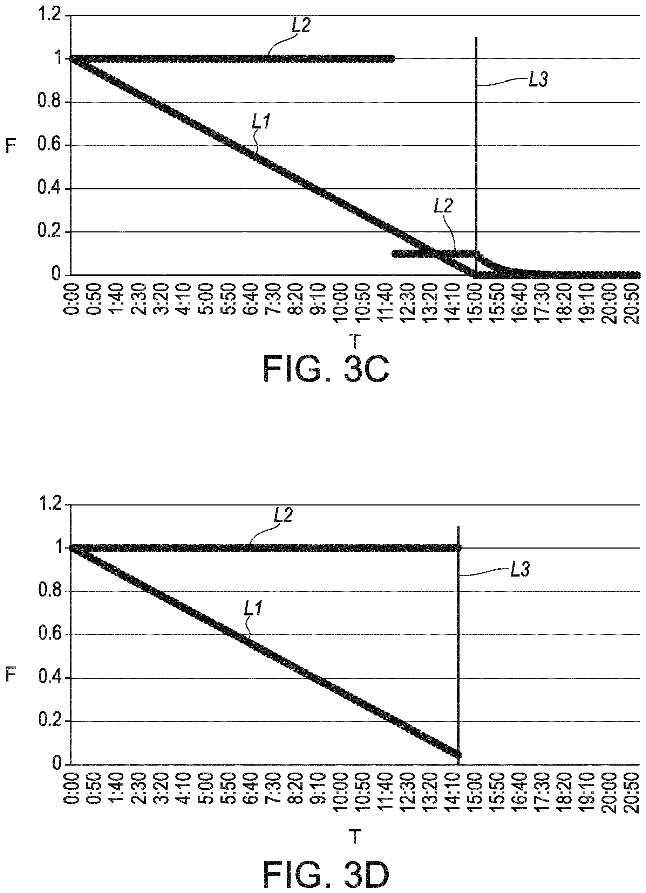

Fig. 3C schematically depicts an embodiment of the sample preparation method wherein the temperature is reduced towards the end, leading to a lower solvent concentration in the evaporation gas. In the depicted embodiment, the same evaporation rate is imposed by increasing the aliquot volume.

Hence, in embodiments, the sample preparation method may comprise varying the temperature during the evaporation stage, such as in the range of 50 - 180 °C. Similarly in embodiments, the sample preparation method may comprise varying the pressure during the evaporation stage, such as in the range of 0-1 barg.

In further embodiments, the evaporation rate may be selected from 1 - 10 mg/h, and the temperature may be selected from the range of ≤ 20 °C.

In further embodiments, the evaporation stage may comprise (essentially) isothermally varying the evaporation rate.

In further embodiments, the evaporation stage may comprise varying the temperature at an (essentially) constant evaporation rate.

Fig. 3D schematically depicts an embodiment of the sample preparation method wherein soaking is stopped when all but a predetermined volume of the solvent has evaporated.

The term "plurality" refers to two or more. Furthermore, the terms "a plurality of' and "a number of' may be used interchangeably.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%. Moreover, the terms "about" and "approximately" may also relate to 90% or higher, such as 95% or higher, especially 99% or higher, even more especially 99.5% or higher, including 100%. For numerical values it is to be understood that the terms "substantially", "essentially", "about", and "approximately" may also relate to the range of 90% - 110%, such as 95%-105%, especially 99%-101% of the values(s) it refers to.

The term "comprise" also includes embodiments wherein the term "comprises" means "consists of".

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

The term "further embodiment" and similar terms may refer to an embodiment comprising the features of the previously discussed embodiment, but may also refer to an alternative embodiment.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", "include", "including", "contain", "containing" and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage. In yet a further aspect, the invention (thus) provides a software product, which, when running on a computer is capable of bringing about (one or more embodiments of) the method as described herein.

The invention also provides a control system that may control the device, apparatus, or system, or that may execute the herein described method or process. Yet further, the invention also provides a computer program product, when running on a computer which is functionally coupled to or comprised by the device, apparatus, or system, controls one or more controllable elements of such device, apparatus, or system.

The invention further applies to a device, apparatus, or system comprising one or more of the characterizing features described in the description and/or shown in the attached drawings. The invention further pertains to a method or process comprising one or more of the characterizing features described in the description and/or shown in the attached drawings. Moreover, if a method or an embodiment of the method is described being executed in a device, apparatus, or system, it will be understood that the device, apparatus, or system is suitable for or configured for (executing) the method or the embodiment of the method, respectively.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

## Claims

1. A sample preparation method for providing a prepared sample (25), the sample preparation method comprising:
- a preparation stage comprising providing a sample holding part (3), wherein the sample holding part (3) comprises a collection chamber (100) having an interior space (101), wherein the interior space (101) hosts one or more single crystals of a porous framework (20);
- a loading stage comprising providing a solvent (10) comprising an analyte (5) to the one or more single crystals of the porous framework (20); and
- an evaporation stage comprising periodically exchanging an aliquot of evaporation gas (40) from the interior space (101) with a second gas (50);
thereby providing the prepared sample (25).

2. The sample preparation method according to claim 1, wherein the second gas (50) comprises an inert gas.

3. The sample preparation method according to any one of the preceding claims, wherein the evaporation stage comprises exchanging aliquots of the evaporation gas (40) at a plurality of exchange events, wherein successive exchange events are separated by durations selected from the range of 1 - 60 min, and wherein each aliquot comprises at least 0.01 vol% of the evaporation gas in the interior space (101).

4. The sample preparation method according to any one of the preceding claims, wherein the evaporation stage comprises controlling an evaporation rate of the solvent by controlling the exchange of the evaporation gas.

5. The sample preparation method according to any one of the preceding claims, wherein the evaporation stage comprises subjecting the interior space to:
- an evaporation rate selected from the range of 0.004 - 40 µL/h;
- a temperature selected from the range of -50 - 200 °C; and
- a pressure selected from the range of -0.2 - 1 barg.

6. The sample preparation method according to claim 5, wherein the pressure is selected from the range of 0.1-1 barg, and wherein the temperature is selected from the range of 50 - 180 °C.

7. The sample preparation method according to claim 5, wherein the evaporation rate is selected from 1 - 10 mg/h, and wherein the temperature is selected from the range of ≤ 20 °C.

8. The sample preparation method according to any one of the preceding claims 5-7, wherein the evaporation stage comprises isothermally varying the evaporation rate.

9. The sample preparation method according to any one of the preceding claims 5-7, wherein the evaporation stage comprises varying the temperature at a constant evaporation rate.

10. The sample preparation method according to any one of the preceding claims, wherein the sample preparation method comprises:
- a prediction stage comprising predicting a soaking endpoint time at which selected from the range of 95 - 100 vol% of the solvent has evaporated;
and wherein the sample preparation method comprises terminating the evaporation stage at the soaking endpoint time.

11. An analysis method, wherein the analysis method comprises:
- providing a prepared sample (25) obtainable by the sample preparation method according to any one of the preceding claims;
- an analysis stage comprising subjecting the prepared sample (25) to electron diffraction analysis or single crystal X-ray analysis to provide an analysis signal.

12. A system (200), wherein the system comprises (i) a hosting element (210) configured to host a sample holding part (3) comprising a collection chamber (100) having an interior space (101), wherein the interior space (101) is configured to host one or more single crystals of a porous framework (20), and (ii) an evaporation element (240) configured to control a periodical gas exchange with the interior space (101).

13. The system (200) according to claim 12, wherein the system (200) comprises a temperature control element (270) configured to control a temperature in the interior space (101) in the range of -50 - 200 °C.

14. The system (200) according to any one of the preceding claims 12-13, wherein the system (200) comprises an analyte handling element (220) configured to provide a solvent (10) comprising an analyte (5) to the interior space (101) of the sample holding part (3).

15. The system (200) according to any one of the preceding claims 12-14, wherein the system (200) comprises a pressure control element (250) configured to control a pressure in the interior space (101) in the range of -0.2 - 1 barg.

16. The system (200) according to any one of the preceding claims 12-15, wherein the system (200) comprises a control system (300), wherein the control system (300) is configured to control the evaporation element (240), wherein the system (200) has an operational mode comprising:
- a preparation stage comprising the hosting element (210) hosting the sample holding part (3), wherein the interior space (101) hosts the one or more single crystals of the porous framework (20);
- an evaporation stage comprising the evaporation element (240) periodically exchanging an evaporation gas (40) from the interior space (101) with a second gas (50); thereby providing the prepared sample (25).

17. The system (200) according to claim 16, wherein the operational mode further comprises:
- a prediction stage comprising the control system (300) predicting a soaking endpoint time at which 95 - 99.9 vol% of the solvent has evaporated;
and wherein the control system is configured to terminate the evaporation stage at the soaking endpoint time.

18. The system (200) according to claim 17, wherein the system (200) further comprises a sensor element (260), wherein in the evaporation stage the sensor element (260) is configured to detect a solvent presence (of the solvent) in the evaporation gas (40) exchanged and to provide a concentration-related signal to the control system (300), and wherein the prediction stage comprises the control system predicting the soaking endpoint time based on the concentration-related signal.

19. The system (200) according to any one of the preceding claims 17-18, wherein the control system (300) is configured to communicate with an external resource, wherein:
- the control system (300) is configured to provide input data to the external resource, wherein the input data comprises one or more of analyte-related data, solvent-related data, and concentration-related data;
- the control system (300) is configured to acquire operational parameters from the external resource; and
- the control system (300) is configured to control the evaporation element based on the operational parameters.
